# EUROPÄISCHE PATENTSCHRIFT

(11) **EP 3 907 160 B1**
(45) Veröffentlichungstag und Bekanntmachung des Hinweises auf die Patenterteilung: **24.07.2024**
(21) Anmeldenummer: 21161180.1
(22) Anmeldetag: 08.03.2021
(51) Int. Cl.: B65G 47/86, B67C 3/24, B67C 7/00

(54) **TEILUNGSVERZUGSSTERN UND VERFAHREN ZUM BEHÄLTERTRANSPORT AN EINEM TEILUNGSVERZUGSSTERN**
REDUCTION STARWHEEL AND METHOD FOR TRANSPORTING CONTAINERS TO A REDUCTION STARWHEEL
ÉTOILE RÉDUCTRICE ET PROCÉDÉ DE TRANSPORT DES RÉCIPIENTS SUR UNE ÉTOILE RÉDUCTRICE

(30) Priorität: 07.05.2020 DE 102020112381
(43) Veröffentlichungstag der Anmeldung: 10.11.2021
(73) Patentinhaber: Krones AG, 93073 Neutraubling (DE)
(72) Erfinder: Stocker, Thomas, 93073 Neutraubling (DE); Seidl, Stephan, 93073 Neutraubling (DE)
(74) Vertreter: Grünecker Patent- und Rechtsanwälte PartG mbB

(56) Entgegenhaltungen:
- EP-A1- 2 980 008
- EP-A1- 3 239 078
- EP-A2- 2 295 352
- WO-A1-2007/132837
- WO-A1-2020/078603
- CN-U- 206 494 708
- JP-A- 2003 237 937

## Beschreibung

Die Erfindung betrifft einen Teilungsverzugsstern und ein Verfahren zum Behältertransport am Teilungsverzugsstern.

In Maschinenblöcken zur Abfüllung flüssiger Produkte, insbesondere Getränke, in Behältern werden Teilungsverzugssterne bekanntermaßen zur Übergabe der Behälter zwischen Rundläufermaschinen, wie beispielsweise einer Etikettiermaschine und einem Füller, eingesetzt. Gebräuchlich sind sowohl passive Teilungsverzugssterne, bei denen die Halteklammern nicht aktiv geöffnet und geschlossen werden, sondern bei denen die Behälter in die Klammern hineingedrückt und aus diesen herausgezogen werden, sowie aktive Teilungsverzugssterne mit aktiv gesteuerten Klammern, die sich dann mittels Steuerrollen und stationärer Steuerkurve öffnen und schließen lassen. Aktive Teilungsverzugssterne ermöglichen prinzipiell eine zuverlässige fliegende Übergabe der Behälter von Greifer zu Greifer. Dies lässt sich zusätzlich durch eine Höhenverstellung der einzelnen Greifer verbessern, da man so einen Höhenschlag des Teilungsverzugssterns kompensieren kann.

Andererseits sind aktive Teilungsverzugssterne vergleichsweise komplex aufgebaut und aufgrund der an den Lagern der Klammerschenkel einwirkenden Kräfte mechanisch empfindlich. Dies steht einer Verwendung aktiver Teilungsverzugssterne bei hohen Maschinenleistungen von beispielsweise mehr als 60.000 Behältern pro Stunde entgegen.

Zum anderen bereiten auch passive Teilungsverzugssterne bei solchen Maschinenleistungen Probleme, da ein zuverlässiges Neckhandling mit den zunehmend filigraneren Behältern beim Teilungsverzug mit passivem Hineindrücken und Herausziehen der Mündungsbereiche in die bzw. aus den Klammern nicht zuverlässig möglich ist. Dies ist noch kritischer, falls die Greifer nicht individuell höhenverstellbar sind, siehe oben.

Folglich können die zunehmend benötigten Maschinenleistungen von mindestens 80.000 Behältern pro Stunde derzeit weder mit aktiven noch mit passiven Teilungsverzugssternen bei gleichzeitig zuverlässiger und produktschonender Behälterübergabe erzielt werden.

Aus der JP 2003 237937 A ist eine prinzipiell zur Verwendung an einem Teilungsverzugsstern geeignete Klammer mit folgenden Merkmalen bekannt: einen um eine erste aufrechte Achse schwenkbar gelagerten Klammerträger; zwei jeweils um eine zweite aufrechte Achse schwenkbare Klammerschenkel mit je einem Kraftarm zum Greifen von Behältern und einem entgegengesetzten Lastarm zum gesteuerten Schließen und Öffnen der Klammer; einen Lagerblock zur Gleitlagerung der Klammerschenkel von oben und unten; und einen Stellmechanismus zur gemeinsamen Höhenverstellung des Lagerblocks und der Klammerschenkel bezüglich des Klammerträgers. Das Dokument WO 2020/078603 A1 offenbart die Merkmale des Oberbegriffs des Anspruchs 1.

Es besteht demgegenüber der Bedarf für verbesserte Teilungsverzugssterne, und Verfahren zum Behältertransport an Teilungsverzugsstemen.

Die gestellte Aufgabe wird mit einem Teilungsverzugsstern für einen Maschinenblock zum Abfüllen von Behältern mit mehreren aktiv zu öffnenden Klammern gemäß Anspruch 1 sowie mit einem Verfahren zum Transport von Behältern am Teilungsverzugsstern gemäß Anspruch 12 gelöst.

Demnach umfassen die Klammern des Teilungsverzugssterns jeweils einen zum Teilungsverzug um eine erste aufrechte Achse (Verzugsachse) schwenkbar gelagerten Klammerträger und zwei jeweils um eine zweite aufrechte Achse (Schwenkachse) schwenkbare Klammerschenkel mit je einem Kraftarm zum Greifen von Behältern und einem entgegengesetzten Lastarm zum gesteuerten Schließen und Öffnen der Klammer.

Erfindungsgemäß umfassen die Klammern des Teilungsverzugssterns jeweils ferner einen Lagerblock zur Gleitlagerung der Klammerschenkel von oben und unten sowie einen Stellmechanismus zur gemeinsamen Höhenverstellung des Lagerblocks und der Klammerschenkel bezüglich des Klammerträgers.

Somit lässt sich die Höhenlage des an den Kraftarmen der Klammerschenkel ausgebildeten Greifers beispielsweise zum Ausgleich eines Höhenschlags des Teilungsverzugssterns verstellen, ohne die Klammerschenkel und den Lagerblock relativ zueinander mit ihrer Höhenlage zu verändern. Dadurch lässt sich auch bei einer Höhenverstellung des Greifers eine im wesentlichen spielfreie Gleitlagerung der Klammerschenkel durch den Lagerblock sowohl von oben als auch von unten unverändert aufrechterhalten.

Dies ermöglicht sowohl eine gleichermaßen stabile und im wesentlichen spielfreie Führung der Klammerschenkel im Lagerblock als auch dessen flexible Höhenverstellung insbesondere zum Zwecke eines individuellen Höhenschlagausgleichs der am Teilungsverzugsstern montierten Klammern.

Der Lagerblock und die davon eingefassten Klammerschenkel können auch als Klammerpaket verstanden werden mit einer festgelegten vertikalen Anordnung seiner Bestandteile zueinander, die auch bei einer individuellen Höhenverstellung der Klammer (Greifer) erhalten bleibt.

Unter aufrechten Achsen sind solche gemeint, die bei eingebauter Klammer im Wesentlichen vertikal ausgerichtet sind. Angaben zur vertikalen oder horizontalen Ausrichtung beziehen sich jeweils auf einen um eine vertikale Säule drehbaren Teilungsverzugsstern.

Die Klammern des Teilungsverzugssterns eignen sich insbesondere zum Neckhandling der Behälter, die insbesondere Flaschen sind, aber auch Vorformlinge oder dergleichen sein können.

Vorzugsweise ist der Lagerblock mehrlagig aufgebaut mit wenigstens einer Bodenplatte und einer Deckplatte sowie mit dazwischen angeordneten Gleitlagerschichten zur Gleitlagerung und zur bezüglich der Bodenplatte und Deckplatte parallelen Führung der Klammerschenkel, insbesondere deren Lastarme, an ihren Ober- und Unterseiten.

Die Gleitlagerung führt die Klammerschenkel beim Schwenken (Öffnen und Schließen der Klammer) in einer im Wesentlichen horizontalen Ausrichtung.

Wenigstens eine der Gleitlagerschichten ist vorzugsweise als Gleitplatte und/oder Gleitfolie ausgebildet. Das Material und die Dicke der Gleitlagerschichten lassen sich dann flexibel und weitgehend unabhängig von den Eigenschaften der Bodenplatte und/oder Deckplatte an die jeweiligen Abstände zwischen den Klammerschenkeln und der Bodenplatte und Deckplatte anpassen. Wenigstens eine der Gleitlagerschichten könnte aber auch als Beschichtung der Bodenplatte und/oder der Deckplatte ausgebildet sein, also nicht als separates Bauteil.

Die Bodenplatte und die Deckplatte fungieren als Stützstruktur des Lagerblocks.

Die Gleitlagerschichten bilden mit den Klammerschenkeln eine Gleitpaarung aus, deren Haft- und Gleitreibungskoeffizienten kleiner sind als eine entsprechende Gleitpaarung der Klammerschenkel mit der Deckplatte und/oder Bodenplatte. Dies ermöglicht eine leichtgängige und dennoch im Wesentlichen spielfrei führende Gleitlagerung der Klammerschenkel beim Öffnen und Schließen der Klammer.

Zusätzlich könnten die Klammern des Teilungsverzugssterns jeweils eine elastische Schicht zwischen der Bodenplatte und unterer Gleitlagerschicht oder zwischen der Deckplatte und oberer Gleitlagerschicht umfassen, um die Klammerschenkel und die Gleitlagerschichten durch permanente Kompression der elastischen Schicht spielfrei aneinander zu drücken. Zu diesem Zweck könnten die Bodenplatte und die Deckplatte durch Distanzstücke in einem geeigneten Abstand zueinander festgelegt werden. Dadurch könnten beispielsweise Toleranzen der Gleitschichtdicke kompensiert werden.

Vorzugsweise sind die zweiten Achsen (Schwenkachsen) als mit dem Klammerträger verschraubte Führungssäulen zur Drehlagerung der Klammerschenkel und zur vertikalen Linearführung des Lagerblocks ausgebildet. Dies ermöglicht eine kompakte und stabile Befestigung und Höhenverstellung des Lagerblocks und der darin geführten Klammerschenkel.

Vorzugsweise umfasst der Stellmechanismus eine am Klammerträger in festgelegter Höhenlage drehbar gelagerte und von dessen Oberseite zu betätigende Gewindespindel, die in den Lagerblock eingreift zu dessen Höhenverstellung bezüglich des Klammerträgers um insbesondere 2 bis 5 mm. Dies ermöglicht eine einfache Höhenanpassung des Klammerpakets über einen zum Höhenschlagausgleich in der Regel ausreichenden Stellbereich.

Vorzugsweise umfasst die Gewindespindel ein oberhalb des Klammerträgers überstehendes Gewinde und eine korrespondierende Kontermutter zum Feststellen der Gewindespindel am Klammerträger. Damit lässt sich die zum Höhenschlagausgleich eingestellte Höhenlage der Klammerschenkel im späteren Arbeitsbetrieb zuverlässig und auf einfache Weise sichern.

Vorzugsweise umfassen die Klammern jeweils ferner im Klammerträger um eine dritte aufrechte Achse (Schaltachse) drehbar gelagerte Steuernocken zum Auseinanderdrücken der Lastarme gegen eine rückstellende Federspannung. Die Klammerschenkel sind dann achsensymmetrisch bezüglich einer Mittellinie der Klammern angeordnet, die von der dritten Achse orthogonal geschnitten wird. Dies ermöglicht eine achsensymmetrische Verstellung der Klammerschenkel beim Öffnen und Schließen der Klammern.

Vorzugsweise sind die Steuernocken mittels einer Welle drehfest an einen Schalthebel gekoppelt, der zur Betätigung durch Entlanglaufen an einer stationären Steuerrolle ausgebildet ist. Somit lassen sich die Klammern auf einfache Weise beim Entlanglaufen an einer stationären Steuerrolle mittels des Schalthebels und des Steuemockens öffnen oder schließen, je nach Anordnung der stationären Steuerrolle bezüglich der Umlaufbahn der Welle.

Vorzugsweise umfassen die Klammern jeweils ferner eine am Klammerträger um eine vierte aufrechte Achse (Laufachse) drehbar gelagerte Steuerrolle zum Schwenken des Klammerträgers um die erste Achse (Verzugsachse), wobei die Steuerrolle axial verstellbar am Klammerträger gelagert ist. Die Steuerrolle läuft beim Umlauf der Klammern an dem Teilungsverzugsstern auf prinzipiell bekannte Weise an einer stationären Steuerkurve entlang und bestimmt durch die jeweilige Lage der stationären Steuerkurve und somit der vierten Achse (Laufachse) bezüglich der ersten Achse (Verzugsachse) den Teilungsverzug der Klammer. Die Verstellbarkeit der Steuerrolle mittels eines Gewindestifts oder dergleichen eignet sich zur Anpassung der Steuerrolle an die stationäre Steuerkurve und entlastet den Antrieb des Teilungsverzugssterns.

Der erfindungsgemäße Teilungsverzugsstern umfasst Klammern, insbesondere 12 bis 16 Klammern, gemäß wenigstens einer der voranstehend beschriebenen Ausführungsformen.

Die Klammerträger der Klammern sind an einer drehbaren Sternträgerplatte insbesondere mittels Gleitlagerbuchsen jeweils um die erste Achse (Verzugsachse) schwenkbar gelagert. Damit lassen sich die bezüglich der Klammer beschriebenen Vorteile an einem Teilungsverzugsstern beispielsweise bei der Behälterübergabe zwischen einer Etikettiermaschine und einer Füllmaschine erzielen. Ein Teilungsverzugsstern mit dieser Klammer wäre auch zwischen einer Behälterherstellungsmaschine, insbesondere einer Behälterstreckblasmaschine, und einer Etikettiermaschine denkbar.

Die gestellte Aufgabe wird ebenso mit einem Maschinenblock zum Abfüllen von Behältern gelöst, wobei der Maschinenblock eine Etikettiermaschine und eine Füllmaschine sowie den dazwischen geschalteten Teilungsverzugsstern umfasst. Der Maschinenblock ist aber auch als Block zwischen einer Behälterherstellungsmaschine und einer Füllmaschine, einem sogenannten Blas-Füll- Block, denkbar, wobei sich der genannte Teilungsverzugsstern zwischen den genannten Maschinen befindet.

Das Verfahren dient zum Transport von Behältern an dem Teilungsverzugsstern gemäß wenigstens einer der voranstehend beschriebenen Ausführungsformen. Bei dem Verfahren wird die individuelle Höhenlage der Klammerschenkel bzw. des Greifers durch Höhenverstellung des Lagerblocks insbesondere zum Ausgleich eines Höhenschlags des Teilungsverzugssterns angepasst.

Zudem wird die Klammer durch aktive Steuerung der Klammerschenkel zum Aufnehmen von Behältern geschlossen und zum Abgeben von Behältern wieder geöffnet. Damit lassen sich die bezüglich des Anspruchs 1 beschriebenen Vorteile erzielen.

Vorzugsweise transportiert die Klammer im Arbeitsbetrieb des Teilungsverzugssterns 5.000 bis 8.000 Behälter pro Stunde, insbesondere 6.000 bis 7.000 Behälter pro Stunde. Damit läßt sich ein gleichermaßen zuverlässiger wie produktschonender und leistungsstarker Arbeitsbetrieb erzielen.

Vorzugsweise läuft die Klammer in mehrfacher Ausführung derart am Teilungsverzugsstern um, dass der Teilungsverzugsstern 60.000 bis 96.000 Behälter pro Stunde, insbesondere 72.000 bis 84.000 Behälter pro Stunde, transportiert.

Vorzugsweise werden die Behälter am Teilungsverzugsstern zwischen einer Etikettiermaschine und einer damit verblockten Füllmaschine transportiert. Damit lassen sich die Vorteile des Verfahrens und der beschriebenen Klammer an einem in Maschinenblöcken besonders anspruchsvollen Transportabschnitt erzielen. Ebenso wäre der Einsatz eines Teilungsverzugssterns mit der Klammer in einen Maschinenblock bestehend in der Reihenfolge aus Behälterblasmaschine, Etikettiermaschine und Füllmaschine zwischen einer Behälterblasmaschine und einer Etikettiermaschine und / oder einer Etikettiermaschine und einem Füller vorstellbar.

Eine bevorzugte Ausführungsform der Erfindung ist zeichnerisch dargestellt. Es zeigen:
- Fig. 1: eine Schrägansicht der Klammer;
- Fig. 2: einen Längsschnitt durch die Klammer;
- Fig. 3: einen detaillierten Längsschnitt im Bereich der Höhenverstellung;
- Fig. 4: eine Draufsicht auf die geöffneten bzw. geschlossenen Klammerschenkel;
- Fig. 5: eine Schrägansicht eines stationären Unterteils des Teilungsverzugssterns;
- Fig. 6: eine schematische Draufsicht auf einen Maschinenblock.

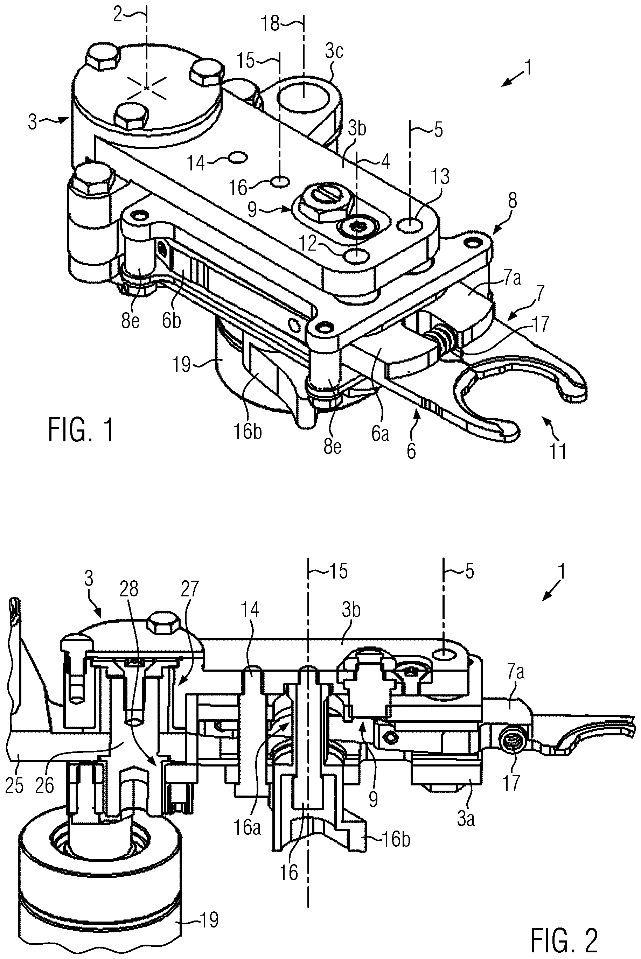

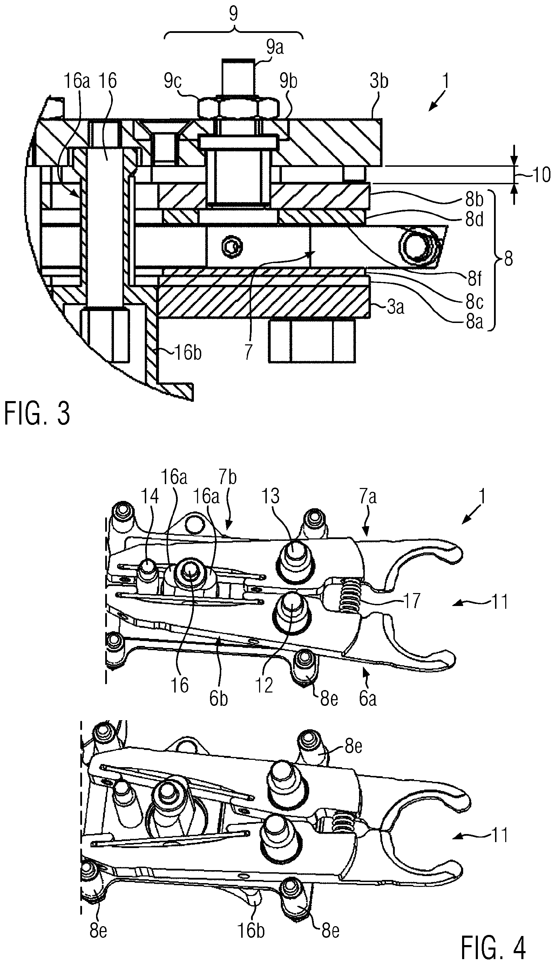

Wie die Fig. 1 erkennen lässt, umfasst die Klammer 1 einen zum Teilungsverzug um eine aufrechte Verzugsachse (erste Achse) 2 schwenkbar gelagerten Klammerträger 3 und zwei um aufrechte Schwenkachsen (zweite Achsen) 4, 5 schwenkbare Klammerschenkel 6, 7 mit je einem Kraftarm 6a, 7a zum Greifen von Behältern und einem entgegengesetzten Lastarm 6b, 7b zum gesteuerten Schließen und Öffnen der Klammer (siehe hierzu auch Fig. 4).

Die Klammer 1 umfasst einen Lagerblock 8 zur horizontalen Führung und Gleitlagerung der Klammerschenkel 6, 7 von oben und unten sowie einen Stellmechanismus 9 zur gemeinsamen Höhenverstellung des Lagerblocks 8 und der Klammerschenkel 6, 7 bezüglich des Klammerträgers 3.

Wie insbesondere die Fig. 2 und 3 zeigen, ist der Lagerblock 8 vorzugsweise mehrlagig aufgebaut mit einer Bodenplatte 8a und einer Deckplatte 8b sowie mit einer zwischen diesen und den Klammerschenkeln 6, 7 angeordneten unteren Gleitlagerschicht 8c und oberen Gleitlagerschicht 8d zur horizontalen Gleitführung der Klammerschenkel 6, 7 von unten und oben.

Die Gleitlagerschichten 8c, 8d bestehen aus einem geeigneten gleitfähigen Material, vorzugsweise einem Kunststoff, wie beispielsweise PEEK, PA oder PTFE.

Die Gleitlagerschichten 8c, 8d sind vorzugsweise als planparallele Gleitplatten oder Gleitfolien ausgebildet, also als von der Bodenplatte 8a und der Deckplatte 8b separat ausgebildete Bauteile geeigneter Dicke. Denkbar wäre prinzipiell aber auch, wenigstens eine der Gleitlagerschichten 8c, 8d als Beschichtung der Bodenplatte 8a und/oder Deckplatte 8b auszubilden.

Der Klammerträger 3 umfasst wenigstens eine unter dem Lagerblock 8 angeordnete untere Platte 3a und eine über dem Lagerblock 8 angeordnete obere Platte 3b.

Der Lagerblock 8 umfasst vorzugsweise ferner Distanzstücke 8e, die einen Abstand zwischen der Bodenplatte 8a und der Deckplatte 8b festlegen. Die Länge der Distanzstücke 8e ist dann an die aufsummierte Dicke der Gleitlagerschichten 8c und 8d sowie der Klammerschenkel 6, 7 angepasst für eine im Wesentlichen spielfreie horizontale Gleitführung der Klammerschenkel 6, 7 zwischen den Gleitplatten 8c, 8d.

Der Lagerblock 8 und die Klammerschenkel 6, 7 können als mehrlagiges Klammerpaket mit festgelegter Gesamtdicke verstanden werden, bei dem die Bodenplatte 8a und die Deckplatte 8b als mechanische Stützstrukturen für die Klammerschenkel 6, 7 wirken und die Gleitlagerschichten 8c, 8d ein im Wesentlichen spielfreies und leichtgängiges horizontales Schwenken der Klammerschenkel 6, 7 beim Öffnen und Schließen der Klammer 1 ermöglichen.

Die Bodenplatte 8a und die Deckplatte 8b sind zu diesem Zweck vorzugsweise über die außerhalb der Klammerschenkel 6, 7 angeordneten Distanzstücke 8e in einem geeigneten Abstand voneinander verschraubt oder anderweitig formschlüssig zueinander festgelegt.

In der Fig. 3 ist ferner beispielhaft durch einen Lagepfeil angedeutet, dass die Klammer 1 eine elastische Schicht 8f zwischen der Bodenplatte 8a und der unteren Gleitlagerschicht 8c oder zwischen der Deckplatte 8b und der oberen Gleitlagerschicht 8d umfassen könnte, um die Klammerschenkel 6, 7 und die Gleitlagerschichten 8c, 8d durch permanente Kompression der elastischen Schicht 8f spielfrei aneinander zu drücken. Voraussetzung dafür wäre, dass die elastische Schicht 8f vom jeweiligen Behältergewicht nicht in unzulässiger Weise einseitig zusammengedrückt wird, die Klammerschenkel 6, 7 also ihre im Wesentlichen horizontale Ausrichtung beibehalten. Optional könnte auch wenigstens eine der Gleitlagerschichten 8c, 8d eine geeignete Elastizität aufweisen.

Der Stellmechanismus 9 umfasst zur Höhenverstellung des Lagerblocks 8 mit den Klammerschenkeln 6, 7 vorzugsweise eine Gewindespindel 9a, ein Axiallager 9b, mit dem die Gewindespindel 9a am Klammerträger 3 in festgelegter Höhenlage drehbar gelagert ist, und eine Kontermutter 9c zum Feststellen der Gewindespindel 9a am Klammerträger 3.

Die Gewindespindel 9a wirkt auf ihrer Oberseite auf bekannte Weise mit der Kontermutter 9c zusammen und greift auf ihrer Unterseite mit einem geeigneten Gewinde formschlüssig in die Deckplatte 8b ein. Beim Drehen der Gewindespindel 9a, die beispielsweise mittels eines stirnseitigen Schlitzes von oben bestätigt wird, ändert sich die Höhenlage der Deckplatte 8b und damit auch die Höhenlage des Lagerblocks 8 und der Klammerschenkel 6 oder 7 insgesamt bezüglich des Klammerträgers 3.

Die Gewindespindel 9a ermöglicht es, einen Abstand 10 zwischen der oberen Platte 3b des Klammerträgers 3 und der Deckplatte 8b des Lagerblocks 8 um beispielsweise 2 bis 5 mm zu verändern, also beispielsweise zwischen 0 und 3 mm. Damit lässt sich die Höhenlage eines von den Kraftarmen 6a, 7a der Klammerschenkel 6, 7 gebildeten Greifers 11 anpassen, um einen gegebenenfalls auftretenden Höhenschlag des zugeordneten Teilungsverzugssterns an der eingebauten Klammer 1 kompensieren zu können.

Wie insbesondere die Fig. 4 erkennen lässt, umfasst die Klammer 1 Führungssäulen 12, 13, die zur Schwenklagerung der Klammerschenkel 6, 7 um die Schwenkachsen 4, 5 und zur Linearführung des Lagerblocks 8 bei dessen Höhenverstellung dienen.

Die untere Platte 3a und die obere Platte 3b des Klammerträgers 3 sind über die Führungssäulen 12, 13 und wenigstens eine vorzugsweise zwischen den Lastarmen 6b, 7b der Klammerschenkel 6, 7 angeordnete Stützsäule 14 fest miteinander verschraubt.

Die Klammer 1 umfasst ferner eine um eine aufrechte Schaltachse (dritte Achse) 15 drehbare Welle 16, die drehfest mit zwei mit den Lastarmen 6b, 7b zusammenwirkenden Steuernocken 16a und einem über die untere Platte 3a nach unten überstehenden Schalthebel 16b verbunden ist.

Wie die Fig. 4 erkennen lässt, wird die Klammer 1 durch eine zwischen den Kraftarmen 6a, 7a der Klammerschenkel 6, 7 wirkende Druckfeder 17 in einer geöffneten Stellung gehalten. Die Klammer 1 wird geöffnet, in dem die Nocken 16a durch Drehen der Welle 16 gegen die Lastarme 6b, 7b der Klammerschenkel 6, 7 gedrückt werden, um diese gegen die Vorspannung der Druckfeder 17 auseinanderzudrücken.

Dadurch, dass die Welle 16 in der unteren und oberen Platte 3a, 3b des Klammerträgers 3 gelagert ist, nicht jedoch im Lagerblock 8, lässt sich die Klammer 1 unabhängig von der mit dem Stellmechanismus 9 eingestellten Höhenlage der Klammerschenkel 6, 7 reproduzierbar öffnen und schließen. Hierbei erleichtern die Gleitlagerschichten 8c, 8d das gleichmäßige und zuverlässige Öffnen der Klammer 1 mittels der Druckfeder 17.

Ähnliches gilt für die Schwenklagerung der Klammerschenkel 6, 7 an dem starr mit der unteren und oberen Platte 3a, 3b des Klammerträgers 3 verbundenen Führungssäulen 12, 13. Demnach wird das Öffnen und Schließen der Klammer 1 von der vertikalen Linearführung des Lagerblocks 8 an den Führungssäulen 12, 13 nicht behindert.

In den Fig. 1 und 2 ist ferner eine um eine aufrechte Laufachse (vierte Achse) 18 drehbare Steuerrolle 19 zum Auslösen eines Teilungsverzugs der Klammer 1 durch Schwenken um die Verzugsachse 1 dargestellt. Zu diesem Zweck umfasst der Klammerträger 3 einen Ausleger 3c zur Lagerung der Steuerrolle 19.

Die Steuerrolle 19 kann bezüglich des Klammerträgers 3, mittels eines Gewindestifts (nicht dargestellt) oder dergleichen verkippt werden, um ggf. Fertigungstoleranzen auszugleichen und eine Schwergängigkeit beim Abrollen in der Steuerkurve zu vermeiden.

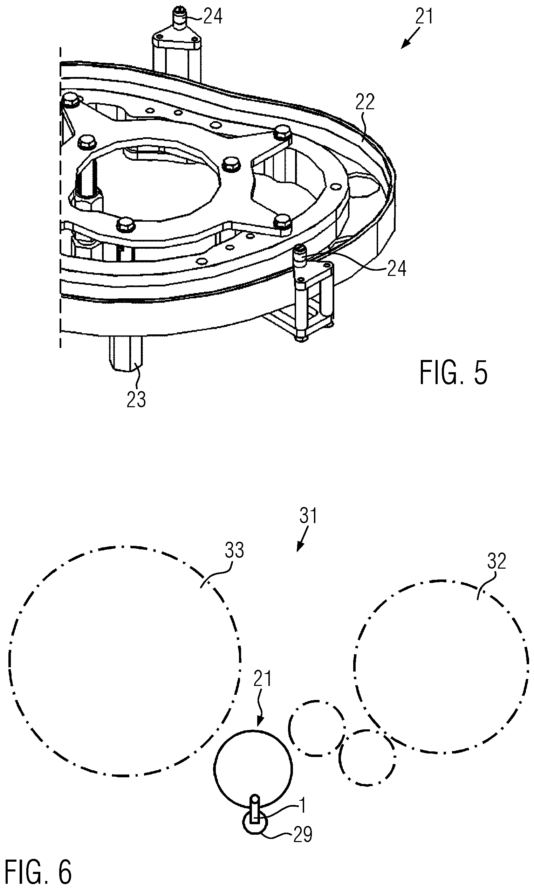

Dies dient der Anpassung der Klammer 1 an einen zugeordneten Teilungsverzugsstern 21, der in der Fig. 6 schematisch angedeutet ist, und insbesondere der Anpassung der Steuerrolle 19 an eine am Teilungsverzugsstern 21 stationär angeordnete Steuerkurve 22, die in der Fig. 5 beispielhaft dargestellt ist.

Die Fig. 5 zeigt ferner, dass die Steuerkurve 22 Bestandteil eines stationären Unterteils 23 des Teilungsverzugssterns 21 ist. Am stationären Unterteil 23 sind ferner stationäre Steuerelemente 24 zum Betätigen des Schalthebels 16b beim Vorbeilaufen der Klammer 1 dargestellt.

Mit den Steuerelementen 24, die beispielsweise als Rollen ausgebildet sein können, werden die einzelnen Klammern 1 entweder geöffnet oder geschlossen, je nachdem, ob die Steuerelemente 24 innerhalb oder außerhalb der Umlaufbahn der Schaltachse 15 der jeweiligen Klammer 1 liegt. Dies ist an sich bekannt und daher nicht im Detail erläutert.

Der Teilungsverzugsstern 21 umfasst ferner eine im Arbeitsbetrieb des Teilungsverzugssterns 21 rotierende Sternträgerplatte 25 mit drehfesten Lagerbolzen 26 zur Schwenklagerung der Klammern 1 um die Verzugsachse 2.

Zwischen den Lagerbolzen 26 und dem diesbezüglich schwenkbaren Klammerträger 3 sind vorzugsweise Gleitlagerbuchsen 27, 28 angeordnet, um einen reibungsarmen Teilungsverzug durch Schwenken der Klammern 1 bezüglich der Sternträgerplatte 25 zu ermöglichen. Eine derartige Gleitlagerung des Klammerträgers 3 und somit der Klammer 1 insgesamt am Teilungsverzugsstern 21 ist prinzipiell bekannt und daher nicht weiter im Detail erläutert.

Im Arbeitsbetrieb des Teilungsverzugssterns 21 laufen die Klammern 1 auf prinzipiell bekannte Weise kontinuierlich um, wobei die Steuerrolle 19 in der stationären Steuerkurve 22 abrollt und dabei die Klammer 1 zum Teilungsverzug bezüglich der Sternträgerplatte 25 um die Verzugsachse 2 schwenkt.

Läuft der Schalthebel 16b der jeweiligen Klammer 1 an einem der Steuerelemente 24 entlang, wird dadurch die Welle 16 gedreht und der Steuernocken 16a entweder zum Öffnen der Klammer 1 von den Lastarmen 6b, 7b der Klammerschenkel 6, 7 weggedreht oder zum Schließen auf die Lastarme 6b, 7b zugedreht.

Die Gleitlagerschichten 8c, 8d begünstigen hierbei eine gleichmäßige und ruckfreie Betätigung der Klammerschenkel 6, 7 sowie deren im Wesentlichen spielfreie Führung unabhängig von der mit dem Stellmechanismus 9 eingestellten Höhenlage des Greifers 11.

Die Höhenlage der Klammerschenkel 6, 7 und damit des Greifers 11 (der Abstand 10 zwischen der Deckplatte 8b des Lagerblocks 8 und der oberen Platte 3b des Klammerträgers 3) wird beispielsweise vor Inbetriebnahme des Teilungsverzugssterns 21 für jede Klammer 1 individuell zum Ausgleich eines Höhenschlags des Teilungsverzugssterns 21 eingestellt.

Vorteilhaft ist hierbei insbesondere, dass die Funktion der an Klammern 1 vorhandenen Greifer 11 durch deren Höhenverstellung nicht beeinflusst wird. Vielmehr können der Lagerblock 8 und die Klammerschenkel 6, 7 als ein modular konfektioniertes Klammerpaket angesehen werden, dessen Höhenlage angepasst werden kann, ohne die Führung der Klammerschenkel 6, 7 im Lagerblock 8 zu verändern.

Dadurch lässt sich die Aufnahme und Abgabe von Behältern 29, die in der Fig. 6 beispielhaft dargestellt sind, im Neckhandling auch für hohe Maschinenleistungen optimieren.

Die Fig. 6 verdeutlicht dies anhand eines beispielhaft dargestellten Maschinenblocks 31, der neben dem beispielhaft angeordneten Teilungsverzugsstern 21 wenigstens noch eine Etikettiermaschine 32 und einen Füller 33 für die Behälter 29 umfasst. Am Teilungsverzugsstern ist der Einfachheit halber lediglich eine einzige Klammer 1 mit einem Behälter 29 schematisch angedeutet. Ein Einsatz des Teilungsverzugsstern 21 mit den Klammern 1 in einem Maschinenblock bestehend aus Behälterblasmaschine, Etikettiermaschine und Füllmaschine ist auch möglich. Dort wäre der Teilungsverzugsstern unter anderem zwischen einer Behälterblasmaschine und einer Etikettiermaschine vorgesehen. Dies ist zeichnerisch nicht dargestellt.

Der Maschinenblock 31 dient demnach der Abfüllung flüssiger Produkte, insbesondere von Getränken, in die Behälter 29 im Neckhandling.

Die Behälter 29 können aufgrund des aktiv mittels der Steuerrollen 19 und der Steuerkurve 22 gesteuerten Öffnens und Schließens der Klammern 1 mit vergleichsweise hohen Maschinenleistungen von beispielsweise 5.000 bis 8.000 Behältern pro Klammer und Stunde, insbesondere von 6.000 bis 7.000 Behältern pro Klammer und Stunde, verarbeitet werden.

Ist ein Teilungsverzugsstern 21 dann beispielsweise mit zwölf Klammern 1 ausgestattet, so ergibt dies eine Maschinenleistung von 60.000 bis 96.000 Behältern pro Stunde und insbesondere von 72.000 bis 84.000 Behältern pro Stunde.

Es ist aber auch denkbar, eine davon abweichende Anzahl von Klammern 1 am Teilungsverzugsstern 21 anzuordnen, beispielsweise 12 bis 16 Klammern 1. Die diesbezügliche Ausgestaltung des Teilungsverzugssterns 21 richtet sich nach der jeweiligen Anforderung im Produktionsbetrieb hinsichtlich der Verarbeitungsgeschwindigkeit bzw. Maschinenleistung einzelner Anlagenkomponenten, wie beispielsweise Füllern 33 und/oder Etikettiermaschinen 32 oder Blasmaschinen (nicht dargestellt) im Maschinenblock 31.

Entsprechend kann es sich bei den Behältern 29 um Flaschen handeln, um Vorformlinge oder dergleichen.

## Patentansprüche

1. Teilungsverzugsstern (21) für einen Maschinenblock (31) zum Abfüllen von Behältern (29), mit Klammern (1), insbesondere mit 12 bis 16 Klammern (1), die jeweils umfassen: einen zum Teilungsverzug um eine erste aufrechte Achse (2) schwenkbar gelagerten Klammerträger (3); zwei jeweils um eine zweite aufrechte Achse (4, 5) schwenkbare Klammerschenkel (6, 7) mit je einem Kraftarm (6a, 7a) zum Greifen von Behältern (29) und mit einem entgegengesetzten Lastarm (6b, 7b) zum gesteuerten Schließen und Öffnen der Klammer (1);
wobei die Klammerträger (3) an einer drehbaren Sternträgerplatte (25) jeweils um die erste Achse (2) schwenkbar gelagert sind,
**dadurch gekennzeichnet, dass**
der Teilungsverzugsstern (21) weiter einen Lagerblock (8) zur Gleitlagerung der Klammerschenkel (6, 7) von oben und unten; und einen Stellmechanismus (9) zur gemeinsamen Höhenverstellung des Lagerblocks (8) und der Klammerschenkel (6, 7) bezüglich des Klammerträgers (3) aufweist.

2. Teilungsverzugsstern nach Anspruch 1, wobei der Lagerblock (8) mehrlagig aufgebaut ist mit wenigstens einer Bodenplatte (8a) und einer Deckplatte (8b) sowie mit dazwischen angeordneten Gleitlagerschichten (8c, 8d) zur Gleitlagerung und zur bezüglich der Bodenplatte und Deckplatte parallelen Führung der Klammerschenkel (6, 7), insbesondere deren Lastarme (6b, 7b).

3. Teilungsverzugsstern nach Anspruch 2, wobei wenigstens eine der Gleitlagerschichten (8c, 8d) als Gleitplatte oder Gleitfolie ausgebildet ist.

4. Teilungsverzugsstern nach einem der vorigen Ansprüche, wobei die zweiten Achsen (4, 5) als mit dem Klammerträger (3) verschraubte Führungssäulen (12, 13) zur Schwenklagerung der Klammerschenkel (6, 7) und zur Linearführung des Lagerblocks (8) ausgebildet sind.

5. Teilungsverzugsstern nach wenigstens einem der vorigen Ansprüche, wobei der Stellmechanismus (9) eine am Klammerträger (3) in festgelegter Höhenlage drehbar gelagerte und von dessen Oberseite zu betätigende Gewindespindel (9a) umfasst, die in den Lagerblock (8) zu dessen Höhenverstellung um insbesondere 2 bis 5 mm bezüglich des Klammerträgers formschlüssig eingreift.

6. Teilungsverzugsstern nach Anspruch 5, wobei die Gewindespindel (9a) ein oberhalb des Klammerträgers (3) überstehendes Gewinde und eine korrespondierende Kontermutter (9c) zum Feststellen der Gewindespindel am Klammerträger umfasst.

7. Teilungsverzugsstern nach wenigstens einem der vorigen Ansprüche, ferner mit im Klammerträger (3) um eine dritte aufrechte Achse (15) drehbar gelagerten Steuernocken (16a) zum Auseinanderdrücken der Lastarme (6b, 7b) gegen eine rückstellende Federspannung.

8. Teilungsverzugsstern nach Anspruch 7, wobei die Steuernocken (16a) mittels einer Welle (16) drehfest an einen Schalthebel (16b) gekoppelt ist, der zur Betätigung durch Entlanglaufen an einer stationären Steuerrolle (24) ausgebildet ist.

9. Teilungsverzugsstern nach wenigstens einem der vorigen Ansprüche, ferner mit einer am Klammerträger (3) um eine vierte aufrechte Achse (18) drehbar gelagerte Steuerrolle (19) zum Schwenken des Klammerträgers (3) um die erste Achse (2), wobei die Steuerrolle axial verstellbar am Klammerträger gelagert ist.

10. Teilungsverzugsstern (21) nach wenigstens einem der vorigen Ansprüche, wobei die Klammerträger (3) an der drehbaren Sternträgerplatte (25) mittels Gleitlagerbuchsen (27, 28) jeweils um die erste Achse (2) schwenkbar gelagert sind.

11. Maschinenblock (31) zum Abfüllen von Behältern (29), umfassend eine Etikettiermaschine (32) und einen Füller (33) für die Behälter sowie wenigstens einen dazwischen geschalteten Teilungsverzugsstern (21) nach wenigstens einem der Ansprüche 1 bis 10.

12. Verfahren zum Transport von Behältern (29) an einem Teilungsverzugsstern (21) nach wenigstens einem der Ansprüche 1 bis 10, wobei die individuelle Höhenlage der Klammerschenkel (6, 7) durch Höhenverstellung des Lagerblocks (8) insbesondere zum Ausgleich eines Höhenschlags des Teilungsverzugssterns angepasst wird.

13. Verfahren nach Anspruch 12, wobei die Klammer (1) im Arbeitsbetrieb des Teilungsverzugssterns (21) 5.000 bis 8.000 Behälter pro Stunde, insbesondere 6.000 bis 7.000 Behälter pro Stunde, transportiert.

14. Verfahren nach Anspruch 12 oder 13, wobei die Klammer (1) in mehrfacher Ausführung derart am Teilungsverzugsstern (21) umläuft, dass dieser 60.000 bis 96.000 Behälter pro Stunde, insbesondere 72.000 bis 84.000 Behälter pro Stunde, transportiert.

15. Verfahren nach einem der Ansprüche 12 bis 14, wobei die Behälter (29) am Teilungsverzugsstern (21) zwischen einer Etikettiermaschine (32) und einem damit verblockten Füller (33) transportiert werden.

## Claims

1. A reduction starwheel (21) for a machine block (31) for filling containers (29), including clamps (1), in particular 12 to 16 clamps (1), each comprising a clamp carrier (3) pivoted about a first upright axis (2) for pitch reduction; two clamp legs (6, 7), each pivotable about a second upright axis (4, 5) and including a force arm (6a, 7a) for gripping containers (29) and an opposing load arm (6b, 7b) for controlled closing and opening of the clamp (1); wherein the clamp carriers (3) are pivoted about the first axis on a rotatable star carrier plate (25),
**characterized in that**
the reduction starwheel (21) further includes a bearing block (8) for slidingly supporting the clamp legs (6, 7) from above and below; and an adjusting mechanism (9) for jointly adjusting the height of the bearing block (8) and the clamp legs (6, 7) with respect to the clamp carrier (3).

2. The reduction starwheel according to claim 1, wherein the bearing block (8) has a multilayered configuration including at least a base plate (8a) and a cover plate (8b) and including sliding bearing layers (8c, 8d) arranged therebetween for sliding support and for guiding the clamp legs (6, 7), in particular their load arms (6b, 7b), parallel to the base plate and cover plate.

3. The reduction starwheel according to claim 2, wherein at least one of the sliding bearing layers (8c, 8d) is configured as a sliding plate or sliding foil.

4. The reduction starwheel according to any one of the preceding claims, wherein the second axes (4, 5) are configured as guide columns (12, 13) bolted to the clamp carrier (3) for pivoting the clamp legs (6, 7) and for linearly guiding the bearing block (8).

5. The reduction starwheel according to at least one of the preceding claims, wherein the adjusting mechanism (9) comprises a threaded spindle (9a) rotatably mounted on the clamp carrier (3) in a fixed height position and to be actuated from the upper side thereof and which engages positively in the bearing block (8) for height adjustment thereof by 2 to 5 mm with respect to the clamp carrier.

6. The reduction starwheel according to claim 5, wherein the threaded spindle (9a) comprises a thread protruding from the clamp carrier (3) and a corresponding lock nut (9c) for locking the threaded spindle to the clamp carrier.

7. The reduction starwheel according to at least one of the preceding claims, further including control cams (16a) mounted in the clamp carrier (3) rotatable about a third upright axis (15) for pressing the load arms (6b, 7b) apart against a restoring spring tension.

8. The reduction starwheel according to claim 7, wherein the control cam (16a) is nonrotatably coupled through a shaft (16) to a switching lever (16b) configured for actuation by running along a stationary control roller (24).

9. The reduction starwheel according to at least one of the preceding claims further including a control roller (19) mounted rotatably about a fourth upright axis (18) for pivoting the clamp carrier (3) about the first axis (2), wherein the control roller is axially adjustably mounted on the clamp carrier (3).

10. The reduction starwheel according to at least one of the preceding claims, wherein the clamp carriers (3) are mounted on the rotatable star carrier plate (25) by means of sliding bearing bushes (27, 28) to be pivotable about the first axis (2).

11. Machine block (31) for filling containers (29) comprising a labelling machine (32) and a filling device (33) for the containers as well as at least one interposed reduction starwheel (21) according to at least one of claims 1 to 10.

12. A method for transporting containers (29) at a reduction starwheel (21) according to at least one of claims 1 to 10, wherein the individual height position of the clamp legs (6, 7) is adjusted by means of height adjustment of the bearing block (8), in particular to compensate for a radial runout of the reduction starwheel.

13. The method according to claim 12, wherein during operation of the reduction starwheel (21) the clamp (1) transports 5,000 to 8,000 containers per hour, in particular 6,000 to 7,000 containers per hour.

14. The method according to claims 12 or 13, wherein a plurality of the clamps (1) rotate on the reduction star wheel (21) so that the same transports 60,000 to 96,000 containers per hour, in particular 72,000 to 84,000 containers per hour.

15. The method according to any one of claims 12 to 14, wherein the containers (29) are transported at the reduction starwheel (21) between a labelling machine (32) and a filling device (33) interlocked therewith.

## Revendications

1. Étoile à décalage de distribution (21) pour un bloc de machine (31) destiné au remplissage de récipients (29), munie de pinces (1), en particulier de 12 à 16 pinces (1), qui comprennent chacune : un porte-pince (3) monté de manière pivotante autour d'un premier axe vertical (2) pour le décalage de distribution ; deux leviers de pince (6, 7) pivotant chacun autour d'un deuxième axe vertical (4, 5), avec chacun un bras de force (6a, 7a) pour saisir des récipients (29) et un bras de charge opposé (6b, 7b) pour la fermeture et l'ouverture contrôlées de la pince (1) ;
dans laquelle les porte-pinces (3) sont montés chacun de manière pivotante autour du premier axe (2) sur une plaque porte-étoile rotative (25),
**caractérisée en ce que** l'étoile à décalage de distribution (21) comporte en outre un bloc de palier (8) constituant un palier lisse pour les leviers de pince (6, 7) par le dessus et le dessous ; et un mécanisme de réglage (9) pour le réglage en hauteur conjoint du bloc de palier (8) et des leviers de pince (6, 7) par rapport au porte-pince (3).

2. Étoile à décalage de distribution selon la revendication 1, dans laquelle le bloc de palier (8) est constitué de plusieurs couches, avec au moins une plaque de base (8a) et une plaque de recouvrement (8b) ainsi que des couches de palier lisse (8c, 8d) intercalées qui servent de palier lisse et de guidage des leviers de pince (6, 7) parallèlement à la plaque de base et à la plaque de recouvrement, en particulier de leurs bras de charge (6b, 7b).

3. Étoile à décalage de distribution selon la revendication 2, dans laquelle au moins l'une des couches de palier lisse (8c, 8d) est constituée comme une plaque coulissante ou un film coulissant.

4. Étoile à décalage de distribution selon l'une des revendications précédentes, dans laquelle les deuxièmes axes (4, 5) sont constitués sous forme de colonnes de guidage (12, 13) vissées sur le porte-pince (3) pour assurer le pivotement des leviers de pince (6, 7) et pour le guidage linéaire du bloc de palier (8).

5. Étoile à décalage de distribution selon au moins l'une des revendications précédentes, dans laquelle le mécanisme de réglage (9) comporte une tige filetée (9a) qui est montée de manière rotative à une hauteur déterminée sur le support de pince (3) et qui peut être actionnée par le haut, et qui s'engage par complémentarité de forme dans le bloc de palier (8) pour son réglage en hauteur, en particulier de 2 à 5 mm par rapport au porte-pince.

6. Étoile à décalage de distribution selon la revendication 5, dans laquelle la tige filetée (9a) comprend un filetage dépassant au dessus du porte-pince (3) et un contre-écrou correspondant (9c) pour bloquer la tige filetée sur le porte-pince.

7. Étoile à décalage de distribution selon au moins l'une des revendications précédentes, comportant en outre des cames de commande (16a) montées de manière rotative dans le porte-pince (3) autour d'un troisième axe vertical (15) pour écarter les bras de charge (6b, 7b) contre une tension de ressort de rappel.

8. Étoile à décalage de distribution selon la revendication 7, dans laquelle la came de commande (16a) est couplée de manière solidaire en rotation au moyen d'une tige (16) à un levier de commande (16b) qui est conçu pour un actionnement par un déplacement le long d'un rouleau de commande stationnaire (24).

9. Étoile à décalage de distribution selon au moins l'une des revendications précédentes, comportant en outre un rouleau de commande (19) monté sur le porte-pince (3) de manière rotative autour d'un quatrième axe vertical (18) pour faire pivoter le porte-pince (3) autour du premier axe (2), dans laquelle le rouleau de commande est monté sur le porte-pince de manière à être ajustable axialement.

10. Étoile à décalage de distribution (21) selon au moins l'une des revendications précédentes, dans laquelle les porte-pinces (3) sont montés chacun de manière pivotante autour du premier axe (2) sur la plaque porte-étoile rotative (25) au moyen de paliers lisses (27, 28).

11. Bloc de machine (31) destiné au remplissage de récipients (29), comprenant une machine d'étiquetage (32) et un dispositif de remplissage (33) pour les récipients, ainsi qu'au moins une étoile à décalage de distribution (21) selon au moins l'une des revendications 1 à 10 intercalée.

12. Procédé de transport de récipients (29) sur une étoile à décalage de distribution (21) selon au moins l'une des revendications 1 à 10, dans lequel la hauteur individuelle des leviers de pince (6, 7) est ajustée par un réglage en hauteur du bloc de palier (8), en particulier pour compenser une excentricité radiale de l'étoile à décalage de distribution.

13. Procédé selon la revendication 12, dans lequel la pince (1) transporte de 5 000 à 8 000 récipients par heure, en particulier de 6 000 à 7 000 récipients par heure, lorsque l'étoile à décalage de distribution (21) est en fonctionnement.

14. Procédé selon la revendication 12 ou 13, dans lequel la pince (1) tourne en plusieurs versions sur l'étoile à décalage de distribution (21) de telle sorte que celle-ci transporte de 60 000 à 96 000 récipients par heure, en particulier de 72 000 à 84 000 récipients par heure.

15. Procédé selon l'une des revendications 12 à 14, dans lequel les récipients (29) sont transportés sur l'étoile à décalage de distribution (21) entre une machine d'étiquetage (32) et un dispositif de remplissage (33) solidaire avec celle-ci.
